Europäisches Patentamt

European Patent Office

Office européen des brevets

(11) Numéro de publication: **0 304 371 B1**

(12) **FASCICULE DE BREVET EUROPEEN**

(45) Date de publication de fascicule du brevet: **15.04.92**

(21) Numéro de dépôt: **88402058.7**

(22) Date de dépôt: **08.08.88**

(51) Int. Cl.⁵: **C03B 5/027**, C03B 5/18, C03B 5/20

(54) **Procédé et dispositif d'élaboration de verre fondu.**

(30) Priorité: **18.08.87 FR 8711666**

(43) Date de publication de la demande:
**22.02.89 Bulletin 89/08**

(45) Mention de la délivrance du brevet:
**15.04.92 Bulletin 92/16**

(84) Etats contractants désignés:
**AT BE CH DE ES FR GB GR IT LI LU NL SE**

(56) Documents cités:
**EP-A- 0 086 858**   **FR-A- 2 387 913**
**US-A- 3 160 692**   **US-A- 3 294 512**
**US-A- 3 421 876**   **US-A- 3 574 585**
**US-A- 3 888 650**   **US-A- 4 029 489**

(73) Titulaire: **SAINT-GOBAIN VITRAGE INTERNA-TIONAL**
**18, avenue d'Alsace**
**F-92400 Courbevoie(FR)**

(72) Inventeur: **Zortea, Michel**
**7, rue Just-de-Bretenières**
**F-71100 Chalon-sur-Saone(FR)**
Inventeur: **Noiret, Robert**
**9, rue de la Dives**
**F-78200 Mantes-La-Jolie(FR)**
Inventeur: **Dossier, Gérard**
**2, allée des Bouvreuils**
**F-77330 Lesigny(FR)**

(74) Mandataire: **de Toytot, Robert et al**
**SAINT-GOBAIN RECHERCHE 39 quai Lucien Lefranc B.P. 135**
**F-93304 Aubervilliers Cédex(FR)**

## Description

L'invention concerne l'élaboration du verre dans des installations continues, c'est-à-dire dans lesquelles les différentes phases du processus conduisant à la fourniture du matériau apte au formage, essentiellement fusion, affinage et conditionnement, se déroulent à l'occasion d'un déplacement de la matière au long de l'installation, au travers de zones successives.

Afin de mieux maîtriser chacune desdites phases du processus, elle propose des moyens pour améliorer le cloisonnement entre lesdites zones et notamment pour régler les flux de verre fondu de l'une à l'autre.

L'invention intéresse plus spécialement les fours à cuve de grandes capacités de production, c'est-à-dire de l'ordre de, par exemple, 600 t/d et plus pour les fabrications de verre flotté, ou de 300 t/d et plus pour le verre creux, mais elle s'avère avantageuse aussi pour des installations de moindre importance, et ceci d'autant plus que la production considérée présente des exigences élevées quant aux niveaux de qualité de l'affinage et/ou de l'homogénéité chimique et thermique du verre à fournir aux dispositifs de formage.

Les options habituellement adoptées dans la structure des installations industrielles et dans leurs modes d'utilisation dépendent de la nature de la fabrication, mais présentent en commun de viser l'indépendance de la conduite de la fusion proprement dite par rapport à celle du conditionnement du verre à livrer au formage.

Une telle indépendance est obtenue, par exemple, en reliant le bassin de fusion au bassin de conditionnement par une gorge immergée, les deux compartiments se trouvant ainsi sans aucune communication quant à l'atmosphère, selon une structure usuelle pour les installations de production de verre creux et de fibre pour isolation.

Les fours visant la fabrication de verre plat, de capacité de production couramment plus élevée, comportent habituellement un corset n'engendrant qu'un passage rétréci en largeur, dont la voûte n'est pas mise au contact du bain de verre, pour relier les compartiments de fusion et de braise.

Sous certains aspects, l'emploi de la gorge présente des avantages sur celui du corset, notamment en garantissant l'indépendance des atmosphères des deux compartiments et en favorisant le prélèvement, dans le bassin consacré à la fusion, de verre présentant éventuellement une meilleure qualité d'affinage, et/ou plus froid, parce que se situant à un niveau plus proche de la sole que de la surface du bain.

A cet égard d'ailleurs, divers perfectionnements ont été proposés dans le passé pour améliorer encore la maîtrise des phénomènes à ce niveau de l'élaboration du verre. On peut par exemple, selon le document FR-A-2 387 913, procéder à divers aménagements de la structure d'entrée de la gorge, permettant d'engendrer dans la cuve de fusion proprement dite un régime de convection à deux boucles superposées et de sélectionner pour le flux de tirée le verre de la couche médiane, en principe de meilleure qualité.

Quoiqu'il en soit, l'emploi d'une gorge n'est actuellement concevable à l'usage que pour des fours de tirée ne dépassant pas notablement 200 t/d, du fait que la section des gorges se trouve pratiquement limitée par les dimensions maximales des pièces de voûte que l'industrie des réfractaires est susceptible de fabriquer à ce jour.

Les fours à bassin de l'industrie du verre plat, dont la capacité de production atteint couramment 600 t/d et plus, ne peuvent donc utiliser une gorge. Pour remédier à l'inconvénient qui pourrait en résulter quant à la qualité du verre admis au stade du formage, on prévoit généralement un allongement du bassin consacré au conditionnement avec la création, en aval du point où la température est la plus élevée et où se produit l'affinage, d'une courroie de convection de débit très important, atteignant par exemple 5 à 10 fois la tirée, dont le courant de surface, inverse de celui qui existe en amont du point source en question, est dirigé vers l'aval et gagne la zone de prélèvement du verre alors que le courant de sole, de débit réduit seulement de la tirée, suit le trajet inverse. On fait généralement appel à un corset, comme on l'a indiqué déjà plus haut, sans que ce courant soit empêché de traverser non seulement le bassin de conditionnement, mais auparavant le corset lui-même, qui permet essentiellement d'en maîtriser l'importance.

Un tel régime de convection soumet donc les pièces réfractaires constituant le corset à une usure importante, affectant sa durée de vie, et s'avère très coûteux en énergie, puisqu'il implique plusieurs cycles thermiques de refroidissement et de réchauffage du verre, entre les températures d'affinage et de braise, avant son prélèvement en vue du formage.

Divers aménagements ont été proposés pour remédier à ces inconvénients des structures à gorge, notamment l'emploi d'une cuve de fusion de profondeur très grandement plus importante que celle du compartiment de travail, qui permettrait, selon le brevet US-A-3 294 512, de renforcer les courants de convection dans la cuve assurant la fusion proprement dite, tout en préservant la zone d'affinage de tels courants.

La présente invention se propose de remédier aux inconvénients de chacune des structures décrites plus haut, gorge et corset, ou tout au moins de les atténuer très substantiellement.

Elle a tout d'abord pour objet un procédé continu d'élaboration de verre en four à cuve selon lequel le matériau vitrifiable est tout d'abord amené à l'état de bain en fusion dans une première zone de la cuve affectée plus spécialement à la fusion, ledit bain gagnant de proche en proche des zones aval successives de la cuve, chacune généralement plus spécialement affectée à une des autres phases du processus d'élaboration du verre, telles que l'affinage et le conditionnement en vue du formage, au travers d'au moins une portion de la cuve possédant un passage de section horizontale réduite, du type des corsets, ledit procédé comportant la mise en oeuvre d'un courant de verre dirigé vers l'amont, dit courant de retour en surface, formant retour dans la zone amont au niveau supérieur à l'entrée dudit passage.

Ledit courant de retour est, selon l'invention, engendré avantageusement par un échauffement réglé du verre en aval de ladite entrée, obtenu de préférence par dissipation localisée d'énergie par effet Joule au sein même du verre, à l'aide d'au moins une électrode immergée dans le bain.

Selon une caractéristique avantageuse, l'invention comporte un cloisonnement à l'égard de l'atmosphère et/ou du rayonnement entre ladite zone amont et ladite zone aval, ce cloisonnement se situant de préférence au voisinage de ladite entrée et atteignant le bain de verre en fusion ou au moins une couche de matières vitrifiables surnageant à la surface dudit bain, ledit courant de retour atteignant au moins la zone située à son aplomb.

De préférence, ledit cloisonnement laisse un libre passage au bain de verre sur une hauteur d'au moins 80 % de la profondeur du bain à cet aplomb.

De préférence encore, l'extraction du verre hors de la zone amont, en particulier de la zone de fusion, résulte essentiellement d'un courant se situant à mi-profondeur du bain à l'aplomb dudit cloisonnement.

En outre, pour minimiser l'usure du cloisonnement, le niveau de la séparation entre le courant de retour de surface et ce courant d'extraction vers l'aval fournissant la tirée, c'est-à-dire le niveau où la composante horizontale de vitesse du verre est nulle se situe de préférence, à l'aplomb dudit cloisonnement, à au moins 90 % de la hauteur du libre passage offert au verre.

Dans une mise en oeuvre particulièrement avantageuse, le mélange vitrifiable introduit dans la cuve du four est distribué sur l'ensemble de la zone du bain située en amont d'un premier cloisonnement, ladite zone du bain est soumise à un chauffage par effet Joule au sein même du verre, effectuant ainsi une fusion dite "à voûte froide", et l'invention est mise en oeuvre à hauteur de ce cloisonnement.

Dans ce cas, il est de préférence appliqué au verre parvenant en aval du cloisonnement un échauffement atteignant au moins la température usuelle d'affinage, complétant ainsi l'élimination des bulles gazeuses apparues dans le bain lors de la fusion, ou qui y ont été introduites avec le mélange vitrifiable lui-même.

L'invention a également pour objet un dispositif d'élaboration continue de verre fondu, particulièrement adapté pour la mise en oeuvre du procédé décrit précédemment, comprenant, dans un four à cuve de forme générale allongée, une pluralité de compartiments parcourus en série par le bain de verre, chacun plus spécialement affecté à l'une des principales phases de l'élaboration du verre, à savoir au moins la fusion et le conditionnement du verre fondu en vue de son formage, au moins une portion de la cuve comportant, entre deux desdits compartiments, un passage de section horizontale réduite, du type des corsets tel que décrit plus haut et, en aval de l'entrée dudit passage, des moyens capables d'engendrer dans le bain de verre un courant vers l'amont, formant retour en surface jusque dans ledit compartiment amont.

Un tel courant peut être engendré par un échauffement localisé du bain de verre provoquant, selon un effet de thermosiphon connu en soi, un courant de convection bouclant sur lui-même, schématiquement à la manière d'une courroie, et le dispositif selon l'invention comporte de préférence, dans cette perspective, à titre de moyens de chauffage localisé, au moins une électrode immergée dans le bain de verre en aval de ladite entrée du corset.

De préférence, ladite entrée comporte en partie haute au moins une paroi constituant cloison entre amont et aval à l'égard de l'atmosphère régnant au-dessus du bain, de préférence mobile verticalement en appui sur le corset lui-même.

De préférence, ladite électrode est située à une distance de ladite cloison d'au plus trois fois la profondeur du bain à l'emplacement de ladite électrode, et de préférence comprise entre la moitié et deux fois cette profondeur.

Ladite cloison est avantageusement en outre réglable en hauteur, pour s'adapter au niveau du bain de verre et éventuellement à l'épaisseur de la couche de matières vitrifiables présente à sa surface, et optionnellement, soit assurer l'étanchéité par son seul contact avec ladite couche, soit s'immerger dans ledit bain sur une profondeur pouvant atteindre 20 % de la profondeur du bain.

L'homogénéité dudit courant de retour, sur la largeur du passage offert au verre, est favorisée par l'emploi d'une pluralité d'électrodes, de préférence disposée dans un même plan vertical transversal. Dans le cas d'un corset de faible largeur, les électrodes peuvent être horizontales, éventuellement traversant d'une rive à l'autre ledit passage, et au nombre d'au moins deux, en vue de l'autonomie de la dissipation d'énergie à ce niveau. Dans les dispositifs utilisant une pluralité d'électrodes verticales alignées transversalement, l'intervalle entre électrodes extrêmes est de préférence compris entre 0,8 et 1,2 fois la largeur du corset.

En outre, afin d'améliorer le niveau de qualité du verre extrait, et de l'affranchir de l'incidence du débit de tirée, l'invention prévoit de disposer en amont de la cloison des électrodes en position telle que les boucles convectives qu'elles engendrent, tout en imposant un intense brassage au verre parvenant à cet emplacement, puissent limiter le développement des boucles convectives associées aux électrodes génératrices dudit courant de retour, de manière à équilibrer celui-ci, et à contribuer à son réglage.

Selon une autre caractéristique avantageuse d'exécution du dispositif de l'invention, le corset comporte un seuil d'une hauteur de l'ordre de 5 à 15 % de la hauteur du bain, au voisinage de l'aplomb de ladite cloison, favorisant ledit brassage et le réglage de la boucle convective associée au courant de retour.

Selon un mode particulièrement avantageux d'exécution, le dispositif de l'invention comporte, en amont de ladite cloison, un compartiment de fusion équipé d'électrodes susceptibles de plonger dans le bain de verre, au travers de la sole ou des parois, ou même suspendues au-dessus du bain, munies de moyens d'alimentation en énergie électrique de puissance adaptée à la capacité de fusion visée pour le four, et des moyens de répartition de mélange vitrifiable sur l'ensemble du bain en fusion de ce compartiment.

La cloison peut assurer sa fonction d'étanchéité au regard de l'atmosphère, dans cette application particulière de l'invention, en affleurant seulement la surface du bain proprement dit, grâce à la couche de matières vitrifiables encore pulvérulentes soumises à la fusion qui prend appui sur ladite paroi, tandis que le courant de retour engendré par les électrodes aval s'oppose lui au passage direct d'infondus.

En pratique, notamment dans ce cas de l'application de l'invention à une telle installation de fusion de verre "à voûte froide", il est commode d'effectuer le réglage du courant de retour en s'aidant des mesures de la température du verre dans le bain, à une faible profondeur, par exemple de l'ordre de cinq centimètres, de part et d'autre de ladite paroi, par exemple à environ dix centimètres de celle-ci : l'existence du courant de retour se traduit par des températures plus élevées à l'aval qu'à l'amont de ladite paroi et une corrélation peut aisément être établie entre la différence entre lesdites températures et les caractéristiques dudit courant de retour.

Des installations anciennes peuvent aisément être modifiées pour la mise en oeuvre de l'invention. Cependant, lorsque l'invention est prise en considération dès la conception du projet d'un four neuf, elle conduit à une structure plus simple et moins coûteuse, substituant à la gorge immergée usuelle dans les fours à bassin un corset muni à son entrée même d'un barrage du type barrière d'écrémage, mobile verticalement, susceptible de s'opposer à une couche surnageante de matières vitrifiables.

Une telle formule autorise des sections de passage beaucoup plus importantes, et par conséquent le développement de fours à grande capacité de production, supérieure à 400 t/d par exemple, en vue de l'élaboration de verre de haute qualité, et garantit une durée de vie augmentée aux pièces réfractaires délimitant l'orifice d'extraction.

D'autres caractéristiques et avantages de l'invention apparaissent dans la description complémentaire détaillée de l'invention, donnée ci-après en référence au dessin qui représente :
- figure 1 : une coupe longitudinale en élévation, selon 1-1 de la figure 2, d'un four de fusion électrique de verre à voûte froide de l'art connu, montrant schématiquement l'allure des courants de convection au voisinage des électrodes du compartiment de fusion ;
- figure 2 : une coupe horizontale de ce même four, selon II-II de la figure 1, montrant en particulier la disposition des électrodes ;
- figure 3 : une coupe longitudinale en élévation, selon III-III de la figure 4, présentant la zone de soutirage d'un four du type de celui des figures 1 et 2, modifié selon l'invention, par la mise en place d'une paroi suspendue mobile verticalement formant retenue pour la couche surnageante de matières vitrifiables, et par la transformation de la gorge en un corset ;
- figure 4 : une coupe horizontale de cette même zone, selon IV-IV de la figure 3, illustrant la disposition des diverses électrodes ;
- figure 5 : une coupe longitudinale en élévation, selon V-V de la figure 6, présentant la zone d'extraction d'un four selon l'invention comportant un corset barré en partie haute par une cloison mobile verticalement formant retenue pour la couche surnageante ;
- figure 6 : une coupe horizontale de cette même zone, selon VI-VI de la figure 5, montrant plus spécialement la forme de la cloison de retenue et la disposition des électrodes par rapport à celle-ci ;
- figure 7 : une vue schématique en plan de l'ensemble d'un four faisant l'objet d'une description détaillée d'exécution et de fonctionnement selon l'invention ;

- figure 8 : un diagramme représentant la vitesse du verre, pour deux tirées différentes, en fonction de l'altitude dans le bain de verre, à l'aplomb de la cloison et dans le plan longitudinal de symétrie du passage d'extraction.

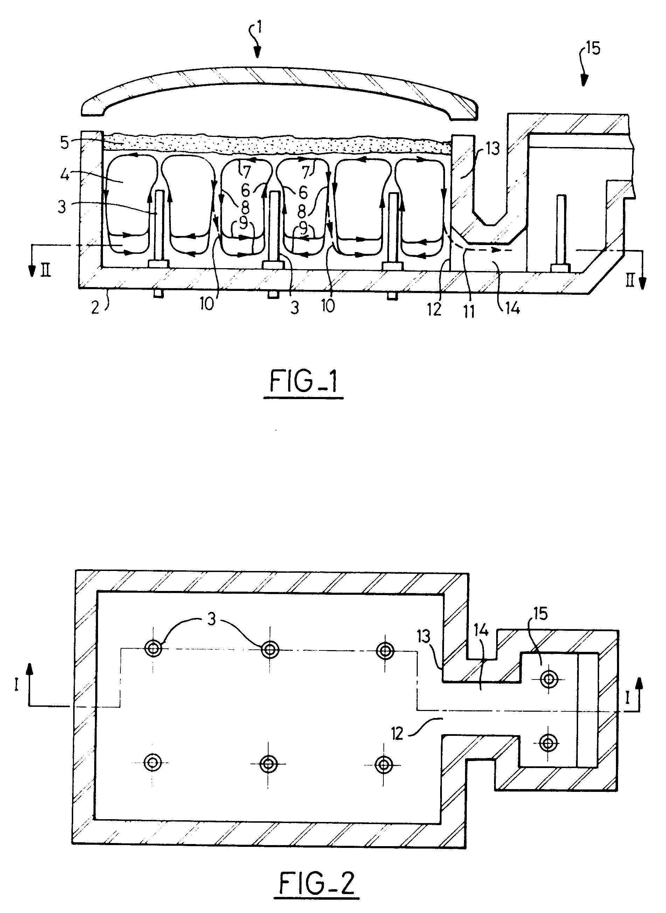

Le four électrique à voûte froide de type connu représenté schématiquement en coupe par les figures 1 et 2 possède une cuve de fusion 1 dont la sole 2 est munie de deux rangées de trois électrodes verticales 3, implantées selon une répartition à maillage carré du type décrit par la publication de brevet français FR-2 552 073, comportant des raccordements électriques (non représentés) assurant une dissipation d'énergie sensiblement uniforme d'une électrode à l'autre. La température du bain 4 de verre fondu peut ainsi se régler à une valeur pratiquement identique d'une région à l'autre. La couche surnageante 5 de matières vitrifiables se trouve soumise à l'action des courants de convection associés à chacune des électrodes, qui sont représentés schématiquement sous la forme de boucles fléchées. Les plus rapides de ces courants de convection suivent un parcours présentant, selon une coupe par un plan contenant l'axe d'une électrode, un dessin en forme de parapluie : le manche correspond aux courants ascendants 6 gaînant l'électrode 3, et le voile représente les courants radiaux centrifuges 7, qui assurent l'essentiel des transferts thermiques et de matière entre bain fondu 4 et couche surnageante pulvérulente 5.

Les courants centrifuges 7 se refroidissent au contact de ladite couche surnageante 5, tout en s'y chargeant de verre neuf. Au fur et à mesure qu'ils s'éloignent de l'électrode 3 qui les a engendrés, leur vitesse se réduit, puis, lorsqu'ils rencontrent les courants 7 associés à une électrode voisine ou une paroi, ils se trouvent déviés en des courants descendants 8. Ceux-ci, lors de leur trajet en direction de la sole, donne naissance à des courants centripètes 9 qui se répartissent sur une plus grande hauteur que les courants centrifuges 7, et par suite de l'effet d'aspiration qu'exercent les courants ascendants 6 la matière est entraînée dans un nouveau parcours de la même boucle convective, d'allure générale torique, analogue à celle qui règne dans une lessiveuse en fonctionnement.

La description donnée ici de la boucle convective torique associée à chaque électrode est obligatoirement quelque peu schématique. Ce régime de convection du bain impliquant des vitesses sensiblement plus importantes dans les régions supérieures du bain, on se rend cependant compte que c'est en partie basse du bain, où le verre élaboré se décante en quelque sorte, et plus spécialement au niveau des courants 9, que s'effectue pratiquement le transfert du verre : il passe d'une boucle convective à sa voisine par des courants 10 (représentés en trait interrompu court sur la figure 1), et de proche en proche son extraction de la cuve se termine en un courant 11 traversant à partir d'une ouverture d'entrée 12 une paroi latérale 13, par une gorge de soutirage 14 débouchant dans le compartiment de conditionnement 15.

Cette représentation de l'interaction entre boucles convectives voisines, dans leur situation d'équilibre, ou d'appui mutuel, limitant la possibilité de transfert de matière d'une boucle à l'autre à la partie inférieure du bain et soumettant la matière transférée à un nouveau brassage à chaque boucle convective traversée, aide à comprendre les avantages apportés par la présente invention, dont des exemples d'exécution vont maintenant être décrits en détail.

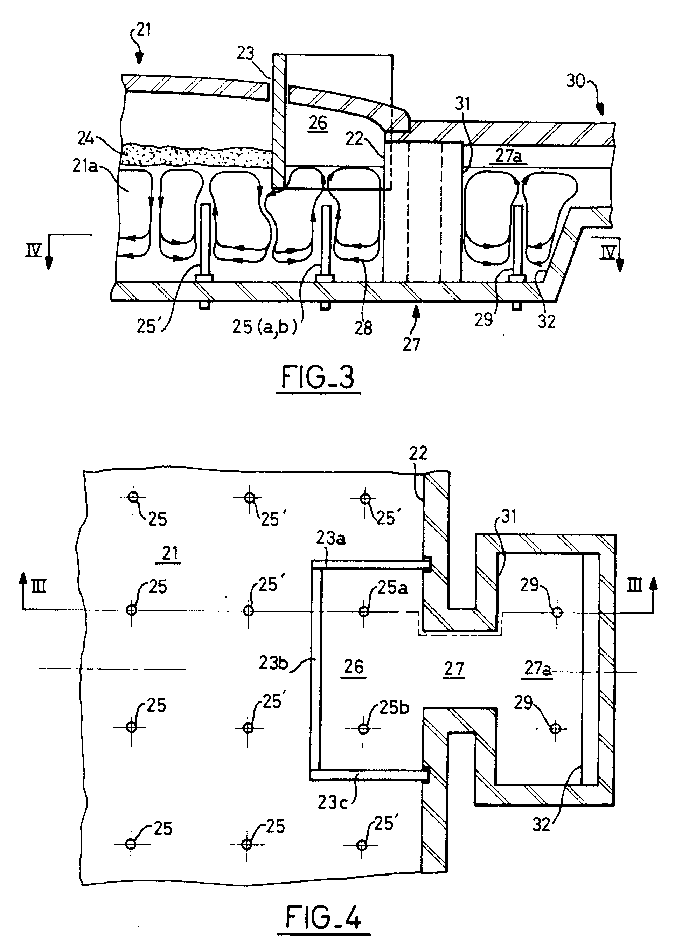

Les figures 3 et 4 représentent un four constituant une extrapolation de celui qui vient d'être décrit en référence aux figures 1 et 2, ce four ayant fait l'objet d'une adaptation conforme à la présente invention.

Cette adaptation comporte la mise en place, en partie haute de la cuve 21, prenant appui contre la paroi aval 22 et plongeant dans le bain 21a, des parois suspendues 23(a,b,c), qui sont disposées de manière à cloisonner l'atmosphère de ladite cuve 21, et à contenir la couche surnageante 24 de matières vitrifiables soumises à la fusion. Ces cloisons 23 s'intercalent dans le maillage régulier d'électrodes 25, dont seulement quatre modules de trois électrodes ont été représentés, isolant à l'entrée du corset 27, construit en remplacement de la gorge immergée du four d'origine, deux électrodes 25a et 25b, disposées symétriquement par rapport au plan longitudinal vertical de symétrie de ce corset pour constituer un compartiment d'homogénéisation 26 exempt de couche surnageante. Cette opération, effectuée par exemple à la suite d'une grave détérioration du ciel de ladite gorge, qui se trouve ainsi supprimée, se traduit par une augmentation importante de la section offerte au flux de verre extrait. Les débits autorisés par une telle transformation sont très augmentés, d'autant plus que le refroidissement du verre est moindre dans un corset que dans une gorge.

Les boucles convectives toriques 28 associées aux électrodes 25a et 25b du compartiment 26 sont réglées pour au moins équilibrer les bouches convectives associées aux électrodes 25 du compartiment de fusion 21 proprement dit, et pour ainsi s'opposer au passage direct de verre neuf élaboré par les électrodes limitrophes 25' jouxtant les cloisons 23(a,b,c), et imposent au verre situé en aval de ces dernières un très efficace brassage complémentaire avant qu'il ne traverse le corset 27. Le débit de verre de la bouche convective associée à chacune des électrodes 25a et 25b est réglé de préférence, selon l'invention, à une valeur au moins égale au débit des bouches convectives de chacune des électrodes limitrophes amont 25'. Pour une plus grande efficacité de l'effet de verrou résultant des boucles convectives des électrodes aval 25a et 25b, opposées aux bouches convectives des électrodes amont 25', on prévoit de préférence de placer les cloisons suspendues 23 (a,b,c) à une distance plus faible des électrodes 25(a,b) que des électrodes 25' : à égalité de puissance électrique appliquée sur ces différentes électrodes, les boucles convectives aval associées aux électrodes 25(a,b) délivrent alors au pied desdites cloisons, ainsi qu'il est représenté sur la figure 3, des flux plus intenses, et de verre plus chaud, que ceux des bouches qui leur sont opposées par lesdites électrodes amont 25'. Il est alors possible de remonter ces cloisons jusqu'à les faire seulement affleurer la surface du bain de verre, sans craindre les inconvénients rappelés dans le préambule, tels que le passage direct d'infondus car il se crée ainsi à leur aplomb un courant de retour en surface.

Dans une forme avantageuse d'exécution de l'invention, des électrodes complémentaires 29 sont disposées en aval du corset 27, dans son épanouissement 27a précédant le compartiment de conditionnement 30.

Dans ledit compartiment 27a, les électrodes 29 sont disposées à une distance de sa paroi amont 31 de préférence supérieure à leur distance de sa paroi aval 32. Ainsi les bouches convectives associées aux électrodes 29 peuvent elles, dans une certaine mesure, compléter à la sortie du corset l'efficacité de celles qui, à l'entrée, sont associées aux électrodes 25(a,b).

Les électrodes 29 ont en outre pour fonction d'assurer un réchauffage homogène du verre parvenant dans le compartiment 27a, et éventuellement un complément de son affinage en réglant de manière appropriée le niveau maximal et la vitesse de cet échauffement, conformément aux prescriptions de la publication de brevet français FR-2 550 523.

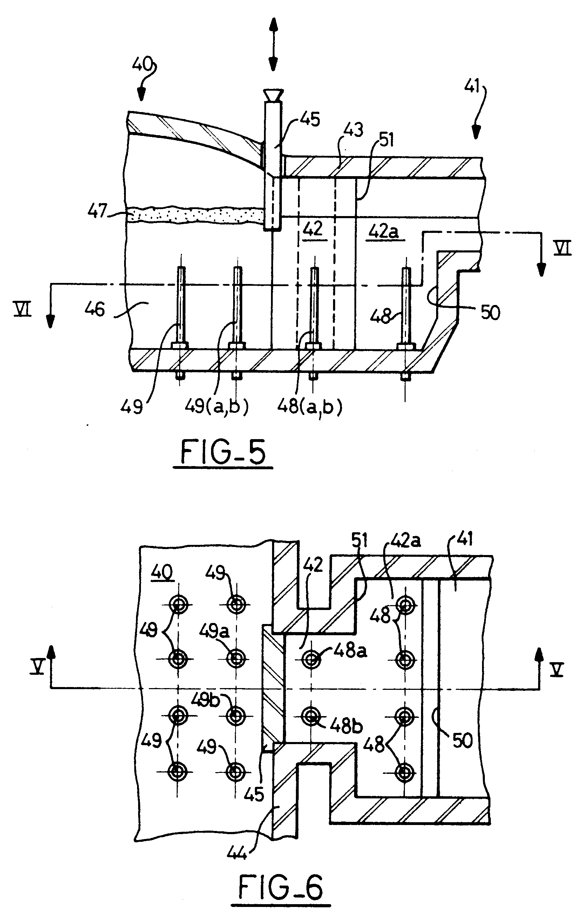

Les figures 5 et 6 représentent des coupes schématiques partielles, respectivement longitudinale en élévation et horizontale, de la zone d'extraction du compartiment de fusion d'un four de structure plus spécifiquement conforme au concept même de l'invention. La cuve de fusion 40 communique avec le compartiment aval 41, visant à conditionner le verre avant formage, par un corset 42 et son épanouissement 42a, à voûte chaude 43. Ledit corset 42, ménagé dans la paroi latérale formant pignon aval 44 de la cuve 40, est muni en partie haute d'un barrage 45 non ou faiblement immergé dans le bain de verre 46, visant essentiellement à contenir à l'emplacement même de son entrée la couche surnageante 47 de matières vitrifiables déposées sur le bain 46 dans la cuve de fusion 40. L'enfoncement du barrage 45 est de préférence réglable, de telle manière qu'il puisse être ajusté à un niveau au moins suffisant, dans les conditions de fonctionnement du four, pour éviter tout passage direct vers le corset 42 de matières solides de la couche surnageante 47.

Conformément à l'invention deux électrodes 48a et 48b sont disposées immédiatement en aval dudit barrage 45, à une distance de préférence légèrement plus faible de celui-ci que celle des électrodes 49a et 49b, situées immédiatement en amont dudit barrage.

En outre, les caractéristiques de dimensions et de mode d'alimentation électrique des électrodes seront choisies pour qu'au moins les boucles convectives associées aux électrodes disposées en regard deux à deux en amont et en aval dudit barrage, respectivement 49a/48a et 49b/48b, puissent être ajustées pour s'équilibrer mutuellement avec, à l'aplomb du barrage, une légère supériorité des flux des bouches aval sur les flux des bouches amont, selon le principe décrit plus haut, et pour s'opposer ainsi au passage direct de verre neuf élaboré par les électrodes 49a et 49b.

Dans de telles conditions et pour la tirée nominale du four, le barrage 45 sera avantageusement remonté en position telle que sa base ne se trouve plus immergée dans le bain 46 mais au contraire se situe, par exemple, de quelques millimètres à plusieurs centimètres au-dessus de l'interface avec la couche surnageante de matières vitrifiables. De la sorte, les bouches convectives conjuguées amont/aval du barrage se trouvent très peu perturbées, ainsi que l'homogénéité générale du brassage dans la cuve de fusion 40. En outre l'usure du barrage 45 devient très faible en comparaison de celle des pièces du "ciel" d'une gorge de soutirage de la technique usuelle, telle que 14 (figures 1 et 2), qu'il est généralement nécessaire, pour cette raison, de refroidir très vigoureusement. Enfin, ce mode de travail facilite un contrôle visuel de l'équilibre entre bouches convectives aval et amont, et un ajustement de la puissance électrique injectée et de sa répartition.

Lorsque la production du four est abaissée, éventuellement mise "en veilleuse", l'enfoncement du barrage 45 sera avantageusement diminué jusqu'à éviter le contact du bain et la puissance électrique appliquée aux électrodes conjuguées amont/aval sera réduite, bien que toujours maintenue à un niveau suffisant pour éviter la dévitrification du verre séjournant dans cette zone du four.

Lors de la remise au régime nominal de production du four, la puissance appliquée aux électrodes aval 48 (a, b) sera augmentée à nouveau en leur accordant dans cette opération une priorité dans le temps sur les électrodes conjuguées amont 49(a, b) et sur les électrodes de la zone de fusion proprement dite 49, et le barrage 45 sera tout d'abord redescendu jusqu'à pénétrer dans le bain sur une profondeur au moins égale à l'épaisseur prévue pour la couche surnageante.

Selon une option avantageuse d'exécution d'un four selon l'invention, on peut disposer dans l'épanouissement 42a du corset 42, ainsi que représenté par les figures 5 et 6, des électrodes complémentaires 48, en aval des électrodes 48(a,b), dont les moyens d'alimentation électrique et la position sont tels que leurs boucles convectives associées puissent servir d'appui à celles des électrodes 48-(a,b) : ces électrodes 48 se présentent à cet effet, de préférence, alignées sur une ou plusieurs rangées transversales, implantées à une distance plus faible de la paroi transversale aval 50 de l'épanouissement 42a que de sa paroi transversale amont 51. Ces électrodes complémentaires 48 complètent le brassage du verre soutiré et sont susceptibles en outre de permettre un gain en qualité d'affinage, en soumettant le verre parvenant dans leurs bouches convectives à un échauffement approprié.

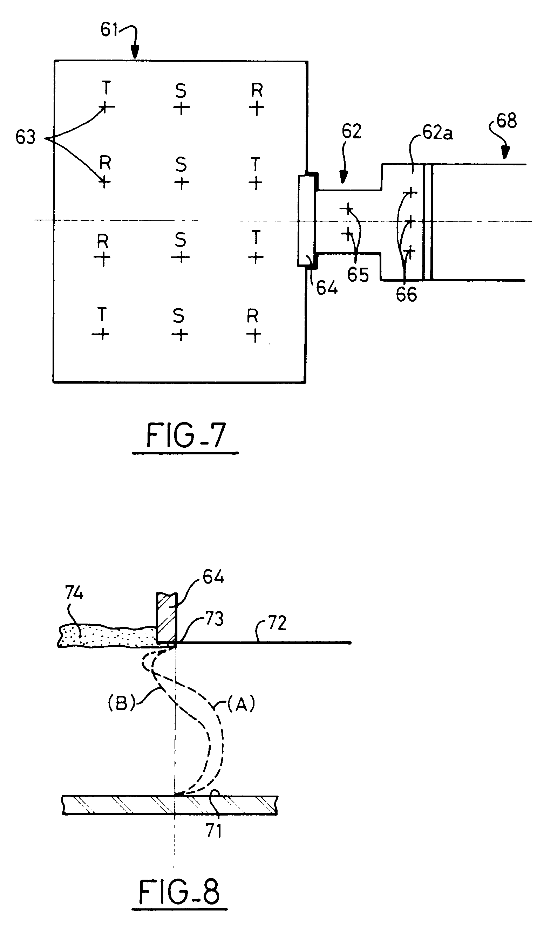

Ces électrodes ont en outre pour fonction d'isoler les électrodes 48(a,b) des actions éventuellement appliquées au verre du compartiment 41 affecté au conditionnement du verre, et de garantir la maîtrise de leur fonction de cloisonnement entre compartiments de fusion 40 et de conditionnement 41, limitant les échanges de matière entre lesdits compartiments au seul courant de tirée, celui-ci étant avantageusement confiné au niveau médian et éventuellement au voisinage de la sole, dans des conditions qui seront examinées plus loin dans les commentaires relatifs à la figure 8.

A noter que ledit courant de tirée draînant la somme des tirées élémentaires de chacune des cellules de fusion que représentent les boucles convectives associées à chaque électrode 49 du compartiment de fusion, par l'intermédiaire de la pluralité de courants d'échange de cellule à cellule, la température au niveau médian dans lesdits courants d'échange est très uniforme sur l'étendue de la sole. Il en est de même pour le courant de tirée franchissant le corset 42, qui se trouve ainsi dans d'excellentes conditions pour que lui soit appliqué un affinage complémentaire, par l'intermédiaire des électrodes 48.

Un autre avantage des électrodes 48 réside dans la facilité qu'elles procurent pour les réparations à chaud sur le barrage 45 ou même son remplacement par une pièce neuve, s'il est nécessaire.

Pour de telles interventions, on fera avantageusement appel à un barrage auxiliaire provisoire, par exemple formé d'une structure métallique refroidie, isolant l'atmosphère du corset 42 et du compartiment 41 de celle de la cuve 40. Les interventions sur ledit barrage 45 sont de toutes manières sans conséquence durable sur la qualité du verre extrait, car la quantité de matières de la couche surnageante susceptible de s'échapper vers le corset 42 est réduite lorsque les électrodes 48(a,b) sont convenablement alimentées.

La mise en oeuvre de l'invention s'applique de manière très générale, mais s'avère spécialement avantageuse pour les fours à voûte froide, la fusion de la charge étant obtenue à l'aide d'électrodes traversant la sole ou les parois, ou même d'électrodes dites suspendues, c'est-à-dire pénétrant dans le bain en fusion par le haut, en traversant la couche surnageante de matières vitrifiables. On prévoit de préférence, dans cette dernière hypothèse, de faire appel soit également à des électrodes suspendues, mais spécialement protégées à l'égard de l'atmosphère oxydante lorsqu'elles sont destinées à se situer en aval du barrage 45, soit à des électrodes traversant la sole, aussi bien pour les électrodes aval 48(a,b) que pour les électrodes amont conjuguées 49(a,b) disposées immédiatement en amont du barrage 45, afin de pouvoir assurer une certaine symétrie par rapport au barrage 45 entre les bouches convectives amont et aval conjuguées. Cette dernière variante simplifie la structure de la voûte chaude 43 du corset 42, où le maintien et le raccordement électrique d'électrodes suspendues sont plus complexes à mettre en oeuvre que dans le compartiment à voûte froide.

L'invention s'applique évidemment avec d'autant plus d'avantage que la capacité de fusion du four est importante, du fait de la limitation de la section des gorges de soutirage classiques, évoquée plus haut, résultant des difficultés de fabrication de pièces réfractaires de grandes dimensions présentant un niveau suffisant de résistance mécanique à chaud, spécialement pour les éléments du "ciel" de gorge, c'est-à-dire formant la voûte.

La construction d'un corset, par contre, ne connaît pas les mêmes difficultés, car un barrage suspendu 45 peut être constitué d'un assemblage de pièces de formes relativement simples, peu épaisses, qui résistent bien par conséquent aux variations de température et qui, travaillant généralement sur chant, se trouvent peu sollicitées du point de vue mécanique, ce qui conduit à adopter des largeurs de corset de l'ordre de 1,2 à 3 m pour des fours de 400 t/d à 800 t/d.

Le choix des dimensions du corset 42 n'est d'ailleurs pas lié seulement à la capacité maximale de production du four et à la durée de vie souhaitée pour le barrage 45, mais aussi aux propriétés du verre à fabriquer, au type de fonctionnement prévu pour le four (importance des variations de tirée...), etc...

Quant au choix des matériaux à utiliser pour la construction du corset, comme du barrage lui-même, il dépend aussi de certains de ces éléments. Par exemple, la fabrication de verres clairs obligera généralement à proscrire les réfractaires riches en $Cr_2O_3$ pourtant de meilleure résistance à la corrosion. On minimisera les effets de cette contrainte sur le barrage en limitant autant que possible la puissance électrique appliquée aux électrodes aval 48(a,b) visant à l'obtention du verrou hydrodynamique, afin de maintenir aux valeurs strictement suffisantes le débit du courant de retour du verre en surface, à l'emplacement de l'arête inférieure du barrage, et surtout sa température et sa vitesse, paramètres déterminants pour la tenue dudit barrage. Le jeu d'électrodes complémentaires 48 disposées en aval des électrodes formant le verrou se justifie alors tout spécialement, permettant un réglage indépendant de l'effet de verrou et de l'affinage complémentaire.

A titre illustratif, on indiquera maintenant, en référence à la vue schématique en plan de la figure 7, les caractéristiques d'un four selon l'invention d'une capacité nominale de production de 150 t/d de verre destiné à la production de verre flotté.

La cuve de fusion 61, de forme générale rectangulaire, offre une surface de sole d'environ 45 m², le corset 62 d'extraction du verre fondu s'ouvrant sur le plus grand côté de la cuve de fusion et présentant un plan de symétrie vertical longitudinal confondu avec celui de ladite cuve.

Quatre modules de trois électrodes 63 équipent la cuve de fusion 61. Lesdites électrodes sont constituées de barreaux cylindriques de molybdène disposés verticalement sur la sole. Rangées selon un maillage carré de 1,8 m de côté, elles sont mises au contact du bain sur une longueur de l'ordre de 0,6 à 1 m, pour une profondeur de bain pouvant varier de 1 à 1,5 m selon la nature de la composition verrière et le mode de conduite du four.

Les électrodes sont alimentées en courant électrique triphasé, la tension étant de préférence réglable en continu, et pouvant atteindre 300 volts entre phases. Le mode de raccordement aux phases (R,S,T) est choisi de façon à constituer deux ensembles de 6 électrodes dont l'ordre des phases est inversé (R,S,T ; T,S,R), avec une symétrie entre ensembles voisins, selon une disposition déjà connue par le brevet cité plus haut.

Le corset 62, d'une largeur intérieure de 1,5 m, est muni à son ouverture sur la cuve de fusion 61 d'un barrage 64 constitué d'un assemblage de pièces en réfractaire qui s'encastre par ses deux rives latérales, sur une fraction de son épaisseur, dans la paroi de la cuve 61, assurant ainsi le guidage dudit barrage lors de son réglage en hauteur, visant la retenue des matières vitrifiables de la couche surnageante en même temps que la séparation d'atmosphère entre cuve de fusion et corset.

A environ 0,8 m en aval du barrage 64, c'est-à-dire sensiblement à mi-longueur du corset 62 et en position symétrique par rapport à l'axe du four, deux électrodes 65 du même type que les électrodes 63 sont destinées à assurer l'effet de verrou hydraulique pour le verre se présentant au niveau supérieur du canal 62, à l'aplomb du barrage 64.

Trois électrodes verticales 66, traversant la sole, sont installées dans l'épanouissement 62a du corset 62 précédant le compartiment de conditionnement 68, dans une position analogue à celles des électrodes 48 du four représenté par les figures 5 et 6. La puissance dissipée par ces électrodes 66 est ainsi aisément réglable indépendamment de celle des électrodes 65.

La puissance totale disponible est d'environ 10 000 kVA sur le four lui-même, et de respectivement 300 et 700 kVA sur les deux groupes d'électrodes 65 et 66. Au régime de production de 150 t/d, la consommation globale est d'environ 0,9 kWh/kg de verre, ce qui est très modéré pour les très bons niveaux d'affinage et d'homogénéité nécessaires à la fabrication de verre flotté, et pour une production spécifique d'environ 3,3 tonnes de verre par m² de sole de fusion et par jour.

A une telle tirée, la température du verre fondu à la sortie du four de fusion 61 s'établit à environ 1450°C. Elle est maintenue sensiblement au même niveau lors du franchissement du corset d'extraction 62, puis élevée jusque vers 1530°C par les électrodes 66 pour un suraffinage du verre à livrer au flottage.

Un tel mode de fonctionnement est très favorable à la longévité du corset : à débit comparable, la gorge traditionnelle d'un four de même capacité serait conçue avec une section de passage environ 10 fois inférieure entraînant érosion physique et corrosion chimique augmentées. En outre, du fait du refroidissement habituellement imposé, elle se trouverait soumise à des températures très hétérogènes, impliquant des contraintes mécaniques également très préjudiciables à son efficacité et à sa longévité.

De plus, alors que la formule de la gorge est considérée comme à la limite de ses possibilités d'utilisation pour des fours de capacité de production de l'ordre de 300 à 400 t/d, la solution selon l'invention proposant un corset combiné à une barrière d'écrêmage pour contenir la charge surnageante et muni d'au moins une électrode à boucle convective créant sous le barrage un courant de retour de surface s'avère aisément extrapolable à des capacités très supérieures par augmentation de sa largeur.

Sur la figure 8, on a représenté pour deux régimes de fonctionnement la variation de la vitesse de circulation du verre en fonction de la distance à la sole 71, dans une configuration usuelle donnée d'un four selon l'invention du type décrit à la figure 7, selon laquelle le barrage 64 se trouve juste affleurer la surface libre 72 du bain, cette vitesse étant mesurée à l'aplomb de l'arête inférieure aval 73 dudit barrage 64, dans le plan longitudinal vertical de symétrie du corset.

La courbe A correspond à la tirée nominale du four, et la courbe B à un régime de tirée faible, proche du simple maintien en veilleuse : la partie du diagramme située à gauche de l'aplomb de l'arête inférieure 73 aval du barrage, considérée comme limite pour la couche surnageante 74, correspond à une circulation vers l'amont (débit négatif), et sa droite à une circulation vers l'aval (débit positif). La tirée du four, pour un régime déterminé de fonctionnement, étant égale à la somme algébrique des débits, positifs et négatifs, est représentée par la différence arithmétique des aires, positives d'une part, et négatives d'autre part, comprises entre la courbe correspondante et l'axe des ordonnées, d'abscisse nulle.

En pratique, le réglage des courants de retour en surface s'effectue essentiellement pour une structure donnée de four et des conditions déterminées de production (dimensions du four, dimensions et dispositions des électrodes, niveau du bain,...), en jouant sur la puissance appliquée sur les électrodes situées en aval du barrage, et plus spécialement sur le rapport de cette puissance à celle qui est fournie à la fusion, grâce au suivi des températures mesurées de part et d'autre du barrage, aux niveaux pris en considération, c'est-à-dire en particulier dans les régions supérieure et inférieure du bain.

Dans les exemples d'exécution du dispositif de l'invention donnés plus haut, on fait appel à des électrodes verticales pour créer les boucles convectives procurant l'effet de verrou hydraulique, mais l'invention ne se limite nullement à cette disposition d'électrodes.

Dans le cas d'installations de faible tonnage, n'exigeant pas de corset de grande largeur, on pourra avantageusement utiliser des électrodes introduites horizontalement au travers des parois, notamment pour engendrer lesdites boucles convectives : l'effet de verrou hydraulique procuré par des électrodes traversant le corset de part en part, dans le sens de la largeur dudit corset, est à puissance dissipée comparable, semblable à celui d'électrodes verticales.

**Revendications**

1.  Procédé continu d'élaboration de verre en four à cuve selon lequel le matériau vitrifiable est tout d'abord amené à l'état de bain en fusion dans une première zone de la cuve plus spécialement affectée à la fusion (21 ; 40 ; 61), ledit bain gagnant de proche en proche des zones aval successives (30 ; 41 ; 68) de la cuve, chacune généralement plus spécialement affectée à une des autres phases du processus d'élaboration du verre, telles que l'affinage et le conditionnement en vue du formage, au travers d'au moins une portion de cuve possédant un passage de section horizontale réduite, du type des corsets (27 ; 42 ; 62), caractérisé en ce qu'il comporte la mise en oeuvre d'un courant de verre dirigé vers l'amont, formant retour en surface dans la zone amont au niveau supérieur de l'entrée dudit passage.

2.  Procédé selon la revendication 1, caractérisé en ce que ledit courant de retour est engendré par un échauffement réglé du verre en aval (26, 27 ; 42 ; 62) de ladite entrée, échauffement obtenu de préférence par dissipation localisée d'énergie par effet Joule au sein même du verre, à l'aide d'au moins une électrode (25a/b ; 48a/b ; 65) immergée dans le bain.

3.  Procédé selon l'une des revendications 1 et 2, caractérisé en ce qu'il comporte un cloisonnement (23a/b/c ; 45 ; 64) à l'égard de l'atmosphère et/ou du rayonnement entre amont et aval, ce cloisonnement se situant de préférence au voisinage de ladite entrée, et atteignant la surface du bain de verre en fusion ou au moins une couche de matières vitrifiables surnageant à la surface dudit bain, ledit courant de retour atteignant au moins la zone située à son aplomb.

4.  Procédé selon la revendication 3, caractérisé en ce que ledit cloisonnement laisse un libre passage au bain de verre sur une hauteur d'au moins 80 % de la profondeur du bain à son aplomb.

5.  Procédé selon l'une des revendications 3 et 4, caractérisé en ce que l'extraction du verre hors de la zone amont du corset, en particulier de la zone de fusion, résulte essentiellement d'un courant se situant à mi-profondeur du bain à l'aplomb dudit cloisonnement.

6.  Procédé selon les revendications 4 et 5, caractérisé en ce que la séparation entre le courant de retour de surface et le courant d'extraction se situe à au moins 90 % de la hauteur dudit libre passage du verre à l'aplomb dudit cloisonnement.

7. Procédé selon l'une des revendications 3 à 6, caractérisé en ce que le mélange vitrifiable introduit dans la cuve du four est distribué sur l'ensemble de la zone du bain située en amont d'un premier cloisonnement, et ladite zone du bain est soumise à un chauffage par effet Joule au sein même du verre.

8. Procédé selon la revendication 7, caractérisé en ce que le verre parvenant en aval dudit premier cloisonnement y est soumis à un échauffement atteignant au moins la température usuelle d'affinage.

9. Dispositif d'élaboration continue de verre fondu comprenant, dans un four à cuve de forme générale allongée, une pluralité de compartiments parcourus en série par le bain de verre, chacun plus spécialement affecté à une phase de la fusion (21, 40, 61) et du conditionnement (30, 41, 68) du verre fondu en vue de son formage, au moins une portion de la cuve possédant, entre deux desdits compartiments, un passage de section horizontale réduite, du type des corsets (27 ; 42 ; 62), caractérisé en ce qu'il comporte en outre, en aval de l'entrée dudit passage, des moyens (25a/b ; 48a/b ; 65) capables d'engendrer dans le bain de verre un courant de surface dirigé vers l'amont, formant retour en surface jusque dans ledit compartiment amont.

10. Dispositif selon la revendication 9, caractérisé en ce que lesdits moyens comprennent des moyens de chauffage (25a/b ; 48 a/b, 65) procurant un échauffement localisé du bain, ces moyens de chauffage localisé comportant de préférence au moins une électrode immergée dans le bain de verre en aval de ladite entrée.

11. Dispositif selon l'une des revendications 9 ou 10, caractérisé en ce que ladite entrée comporte en partie haute, au moins une paroi (23a/b/c ; 45 ; 64), de préférence mobile verticalement, constituant cloison entre amont et aval à l'égard de l'atmosphère régnant au dessus du bain (21a ; 46 ; 72).

12. Dispositif selon la revendication 11, caractérisé en ce que ladite électrode (25a/b ; 48a/b ; 65) est située à une distance de ladite cloison (23a/b ; 45 ; 64) d'au plus trois fois la profondeur du bain à l'emplacement de ladite électrode et de préférence comprise entre la moitié et deux fois cette profondeur.

13. Dispositif selon la revendication 11, caractérisé en ce que ladite cloison comporte des moyens de réglage en hauteur permettant de l'immerger dans le bain sur une profondeur pouvant atteindre 20 % de la profondeur du bain.

14. Dispositif selon l'une des revendications 10 à 12, caractérisé en ce que lesdits moyens de chauffage localisé comprennent une pluralité d'électrodes, disposées dans un même plan vertical transversal.

15. Dispositif selon la revendication 14, caractérisé en ce que lesdites électrodes sont disposées verticalement, l'intervalle entre électrodes extrêmes étant compris entre 0,8 et 1,2 fois la largeur du corset.

16. Dispositif selon l'une des revendications 11 à 15, caractérisé en ce qu'il comporte en amont de ladite cloison et sensiblement en regard de ladite électrode ou pluralité d'électrodes, une ou plusieurs électrodes (25 ; 49 a/b) susceptibles d'engendrer des boucles convectives limitant le développement des boucles convectives associées aux premières dites électrodes.

17. Dispositif selon l'une des revendications 11 à 16, caractérisé en ce qu'il comporte de moyens de répartition de mélange vitrifiable (23a/b/c ; 24 ; 47 ; 74) sur l'ensemble de la zone (21 ; 40 ; 61) de la cuve située en amont de ladite cloison (45 ; 64), ainsi que des électrodes (25 ; 49) plongeant dans le bain contenu dans ladite zone et des moyens d'alimentation en énergie électrique de puissance adaptée à la capacité de fusion visée pour le four.

18. Dispositif selon l'une des revendications 11 à 17, caractérisé en ce que ledit corset comporte un seuil d'une hauteur de 5 à 15 % de la profondeur du bain, au voisinage de l'aplomb de ladite cloison.

**Claims**

1. Continuous method for the production of glass in a tank furnace, according to which the vitrifiable material is first of all brought into the molten bath state in a first zone of the tank more especially devoted to fusion (21; 40; 61), said molten bath gradually reaching successive downstream zones (30; 41; 68) of the tank , each zone generally more specifically devoted to one of the other phases of the production process for the glass, such as the refining and conditioning for the purpose of shaping or moulding, through at least one tank portion having a passage of reduced horizontal section of the constriction or neck type (27; 42;

62), characterized in that the method consists of using a current of glass directed upstream and forming a surface return into the upstream zone at the upper level of the inlet to said passage.

2. Method according to Claim 1, characterized in that said return current is created by a controlled heating of the glass downstream (26, 27; 42; 62) of said inlet, this heating being achieved preferably by localized dissipation of energy by Joule effect within the body of the glass itself, by means of at least one electrode (25a/b; 48a/b; 65) immersed in the bath.

3. Method according to one of Claims 1 and 2, characterized in that the method comprises a partitioning (23a/b/c; 45; 64) with regard to atmosphere and/or radiation between upstream and downstream sides, this partitioning being situated preferably in the vicinity of said inlet and reaching down to the surface of the molten glass bath or at least to a layer of vitrifiable materials floating on the surface of said bath, said return current reaching at least the zone situated vertically below this partition.

4. Method according to claim 3, characterized in that said partitioning leaves a free passage to the molten glass bath over a height of at least 80% of the depth of the bath beneath the partition.

5. Method according to one of Claims 3 and 4, characterized in that the extraction of the glass from the zone upstream of the constriction, in particular from the fusion zone, results essentially from a current situated at mid-depth of the bath vertically below said partition.

6. Method according to Claims 4 and 5, characterized in that the separation between the surface return current and the extraction current is situated at at least 90% of the height of said free passage for the glass vertically below said partition.

7. Method according to one of Claims 3 to 6, characterized in that the vitrifiable mixture introduced into the tank of the furnace is distributed over the whole of the zone of the bath situated upstream of a first partitioning, and said zone of the bath is subjected to a heating by Joule effect within the body itself of the glass.

8. Method according to Claim 7, characterized in that the glass arriving downstream of said first partitioning is subjected there to a heating reaching at least the usual refining temperature.

9. Device for the continuous production of molten glass comprising, in a tank furnace of generally elongate shape, a plurality of compartments through which the molten glass bath passes in series, each compartment being more especially devoted to one phase of the fusion (21, 40, 61) and of the conditioning (30, 41, 68) of the molten glass with a view to its shaping or moulding, at least one portion of the tank possessing, between two of said compartments, a passage of reduced horizontal section of the constriction or neck type (27; 42; 62), characterized in that the device comprises, in addition, downstream of the inlet to said passage, means (25a/b; 48a/b; 65) capable of creating, in the glass bath, a surface current directed upstream, forming a surface return as far as said upstream compartment.

10. Device according to Claim 9, characterized in that said means comprise heating means (25a/b; 48a/b; 65) creating a localized heating of the bath, these localized heating means preferably comprising at least one electrode immersed in the glass bath downstream of said inlet.

11. Device according to one of Claims 9 or 10, characterized in that said inlet comprises, in the upper part, at least one wall (23a/b/c; 45; 64), preferably vertically movable, constituting a partition between upstream and downstream sides with regard to the atmosphere existing above the bath (21a; 46; 72).

12. Device according to Claim 11, characterized in that said electrode (25a/b; 48a/b; 65) is situated at a distance from said partition (23a/b; 45; 64) of at most three times the depth of the bath at the position of said electrode and preferably comprised between one-half and twice this depth.

13. Device according to claim 11, characterized in that said partition comprises means for regulating its height, enabling it to be immersed into the bath to a depth which may be as much as 20% of the depth of the bath.

14. Device according to one of Claims 10 to 12, characterized in that said localized heating means comprise a plurality of electrodes, disposed in a single transverse vertical plane.

**15.** Device according to Claim 14, characterized in that said electrodes are disposed vertically, the spacing between extreme electrodes being comprised between 0.8 and 1.2 times the width of the constriction.

**16.** Device according to one of Claims 11 to 15, characterized in that it comprises, upstream of said partition and substantially opposite said electrode or plurality of electrodes, one or more electrodes (25; 49a/b) adapted for creating convective loops limiting the development of the convective loops associated with the first said electrodes.

**17.** Device according to one of Claims 11 to 16, characterized in that it comprises means for distributing the vitrifiable mixture (23a/b/c; 24; 47; 74) over the whole of the zone (21; 40; 61) of the tank situated upstream of said partition (45; 64), and also electrodes (25; 49) penetrating into the bath contained in said zone and means for supplying electrical energy of a power adapted to the melting capacity intended for the furnace.

**18.** Device according to one of Claim 11 to 17, characterized in that said constriction comprises a threshold or sill of a height of 5 to 15% of the depth of the bath, in the vicinity of the vertical through said partition.

**Patentansprüche**

**1.** Kontinuierliches Verfahren zum Erschmelzen von Glas in einem Wannenofen, bei welchem das verglasbare Material zunächst in einer ersten Zone (21; 40; 61) der Wanne, welche insbesondere für den Schmelzvorgang vorgesehen ist, in den Zustand eines Schmelzbades übergeführt wird, wobei dieses Bad nach und nach aufeinanderfolgende, stromabwärtige Zonen (30; 41; 68) der Wanne durchläuft, von denen jede im allgemeinen für eine der anderen Phasen des Glaserschmelzungsvorganges im spezielleren bestimmt ist, wie für die Läuterung und für die Konditionierung zwecks Formgebung, wobei das Bad wenigstens einen Teil der Wanne durchläuft, der einen Durchlaß von verringertem Horizontalschnitt vom Typus der Einschnürungen (27; 42; 62) aufweist, dadurch gekennzeichnet, daß dieses Verfahren den Einsatz eines stromaufwärts gerichteten Glasstromes umfaßt, der in der stromaufwärtigen Zone und auf einem höheren Niveau als dem Eingang in den Durchlaß, einen Rückstrom zurück zur Oberfläche bildet.

**2.** Verfahren nach Anspruch 1, dadurch gekennzeichnet, daß dieser Rückstrom durch ein geregeltes Erhitzen des Glases stromabwärts (26, 27; 42; 62) des Eingangs erzeugt wird, wobei dieses Erhitzen vorzugsweise durch eine lokalisierte Dissipation von Energie auf Grund eines Joule-Effektes im Inneren des Glases mit Hilfe wenigstens einer in das Bad eingetauchten Elektrode (25a/b; 48a/b; 65) erhalten wird.

**3.** Verfahren nach Anspruch 1 oder 2, dadurch gekennzeichnet, daß es eine Unterteilung (23a/b/c; 45; 64) hinsichtlich der Atmosphäre und/oder der Strahlung zwischen stromaufwärts und stromabwärts umfaßt, wobei diese Unterteilung vorzugsweise dem Eingang benachbart angeordnet ist und bis zur Oberfläche des im Schmelzen begriffenen Glasbades oder doch wenigstens bis zu einer auf der Oberfläche dieses Bades schwimmenden Schicht aus verglasbaren Materialien reicht, wobei der Rückstrom wenigstens die lotrecht zu dieser Unterteilung gelegene Zone erreicht.

**4.** Verfahren nach Anspruch 3, dadurch gekennzeichnet, daß die genannte Unterteilung einen freien Durchlaß lotrecht zur Unterteilung für das Glasbad über eine Höhe, die wenigstens 80 % der Tiefe des Bades ausmacht, beläßt.

**5.** Verfahren nach einem der Ansprüche 3 und 4, dadurch gekennzeichnet, daß das Abziehen des Glases aus der stromaufwärts der Einschnürung gelegenen Zone und insbesondere aus der Schmelzzone im wesentlichen das Ergebnis eines Stromes darstellt, welcher auf der halben Tiefe des Bades und lotrecht zur Unterteilung vorhanden ist.

**6.** Verfahren nach Anspruch 4 oder 5, dadurch gekennzeichnet, daß die Trennung zwischen dem Oberflächenrückstrom und dem Abziehstrom bei wenigstens 90 % der Höhe des freien Durchlasses für das Glas und lotrecht zur Unterteilung gelegen ist.

**7.** Verfahren nach einem der Ansprüche 3 bis 6, dadurch gekennzeichnet, daß das in die Ofenwanne eingeführte, verglasbare Gemisch über die Gesamtheit jener Zone des Bades verteilt wird, die stromaufwärts einer ersten Unterteilung gelegen ist, und daß diese Zone des Bades einem Erhitzen durch einen Joule-Effekt im Inneren des Glases unterworfen wird.

**8.** Verfahren nach Anspruch 7, dadurch gekennzeichnet, daß das stromabwärts der ersten Unterteilung eintreffende Glas dort einem Erhitzen unterworfen wird, das wenigstens die gewöhnliche Temperatur der Läuterung erreicht.

9. Vorrichtung zum Durchlauferschmelzen einer Glasschmelze, welche Vorrichtung in einem Ofen mit einer Wanne von im allgemeinen länglicher Form eine Mehrzahl von Abteilen aufweist, welche der Reihe nach vom Glasbad durchlaufen werden, und von denen jedes im spezielleren für eine Phase des Schmelzens (21, 40, 61) und des Konditionierens (30, 41, 68) des geschmolzenen Glases zwecks Formgebung desselben bestimmt ist, und wobei wenigstens ein Teil der Wanne zwischen zwei Abteilen einen Durchlaß mit verringertem Horizontalquerschnitt vom Typ der Einschnürungen (27; 42; 62) umfaßt, dadurch gekennzeichnet, daß die Vorrichtung außerdem stromabwärts vom Eingang in den Durchlaß Einrichtungen (25a/b; 48a/b; 65) aufweist, die befähigt sind, im Glasbad einen stromaufwärts gerichteten Oberflächenstrom zu erzeugen, welcher bis in das stromaufwärtige Abteil hinein einen Rückstrom zur Oberfläche bildet.

10. Vorrichtung nach Anspruch 9, dadurch gekennzeichnet, daß die Einrichtungen Heizeinrichtungen (25a/b; 48a/b, 65) umfassen, die ein lokalisiertes Erhitzen des Bades bewirken, wobei diese Einrichtungen zum lokalisierten Erhitzen vorzugsweise wenigstens eine Elektrode aufweisen, die in das Glasbad stromabwärts des Einganges eingetaucht ist.

11. Vorrichtung nach Anspruch 9 oder 10, dadurch gekennzeichnet, daß der Eingang in seinem oberen Teil wenigstens eine, vorzugsweise vertikal bewegliche Wand (23a/b/c; 45; 64) aufweist, die eine Trennwand zwischen stromaufwärts und stromabwärts hinsichtlich der über dem Bad (21a; 46; 72) herrschenden Atmosphäre darstellt.

12. Vorrichtung nach Anspruch 11, dadurch gekennzeichnet, daß die Elektrode (25a/b; 48a/b; 65) in einem Abstand von der Trennwand (23a/b; 45; 64) angeordnet ist, der höchstens der dreifachen Tiefe des Bades an der Stelle der Elektrode und vorzugsweise zwischen der Hälfte und dem Doppelten dieser Tiefe entspricht.

13. Vorrichtung nach Anspruch 11, dadurch gekennzeichnet, daß die Trennwand Einrichtungen zum Regeln ihrer Höhe aufweist, die es ermöglichen, diese Trennwand in das Bad bis auf eine Tiefe einzutauchen, welche 20 % der Tiefe des Bades erreichen kann.

14. Vorrichtung nach einem der Ansprüche 10 bis 12, dadurch gekennzeichnet, daß die Einrichtungen zum lokalisierten Erhitzen mehrere Elektroden aufweisen, die in ein und derselben, in der Querrichtung verlaufenden Vertikalebene angeordnet sind.

15. Vorrichtung nach Anspruch 14, dadurch gekennzeichnet, daß die Elektroden vertikal angeordnet sind, wobei der Abstand zwischen den äußersten Elektroden zwischen dem 0,8-fachen und dem 1,2-fachen der Breite der Einschnürung beträgt.

16. Vorrichtung nach einem der Ansprüche 11 bis 15, dadurch gekennzeichnet, daß sie stromaufwärts der Trennwand und im wesentlichen der Elektrode bzw. Mehrzahl von Elektroden gegenüberliegend eine oder mehrere Elektroden (25; 49a/b) aufweist, die befähigt sind, Konvektionsschlingen zu erzeugen, welche die Entwicklung der den ersten Elektroden zugeordneten Konvektionsschlingen beschränken können.

17. Vorrichtung nach einem der Ansprüche 11 bis 16, dadurch gekennzeichnet, daß sie Einrichtungen zum Verteilen des verglasbaren Gemisches (23a/b/c; 24; 47; 74) über die Gesamtheit der Zone (21; 40; 61) der Wanne, welche stromaufwärts der Trennwand (45; 64) angeordnet ist, und Elektroden (25; 49), die in das in der Zone enthaltene Bad eintauchen, sowie Einrichtungen für die Zufuhr von elektrischer Energie mit an die für den Ofen ins Auge gefaßte Schmelzkapazität angepaßter Leistung aufweist.

18. Vorrichtung nach einem der Ansprüche 11 bis 17, dadurch gekennzeichnet, daß die Einschnürung eine Schwelle mit einer Höhe aufweist, die 5 bis 15 % der Tiefe des Bades nahe der Lotrechten zur Trennwand entspricht.

FIG_1

FIG_2

FIG_3

FIG_4

FIG_5

FIG_6

16

FIG-7

FIG-8